# EUROPEAN PATENT SPECIFICATION

(11) **EP 3 765 403 B1**
(45) Date of publication and mention of the grant of the patent: **17.11.2021**
(21) Application number: 19705183.2
(22) Date of filing: 19.02.2019
(51) Int. Cl.: C01B 3/38

(54) **METHOD FOR REVAMPING AND INCREASING THE CAPACITY OF A HYDROCARBON REFORMING SECTION**
VERFAHREN ZUR AUSBESSERUNG UND ERHÖHUNG DER KAPAZITÄT EINES KOHLENWASSERSTOFFREFORMIERUNGSABSCHNITTS
PROCÉDÉ DE TRANSFORMATION ET D'AUGMENTATION DE LA CAPACITÉ D'UNE SECTION DE REFORMAGE D'HYDROCARBURE

(30) Priority: 13.03.2018 EP 18161463
(43) Date of publication of application: 20.01.2021
(73) Proprietor: CASALE SA, 6900 Lugano (CH)
(72) Inventor: FILIPPI, Ermanno, 6976 Castagnola (CH)
(74) Representative: M. Zardi & Co S.A.
(86) International application number: PCT/EP2019/054036
(87) International publication number: WO 2019/174868

(56) References cited:
- EP-A1- 2 671 636
- WO-A1-2015/067436

## Description

### Field of application

The invention relates to the field of reforming of hydrocarbons for obtaining a synthesis gas by reacting said hydrocarbons with steam on a suitable catalyst. The invention in particular relates to a method for revamping a hydrocarbon reforming section in chemical plants.

### Prior art

Chemical plants which comprise a hydrocarbon reforming section are known. In general a steam reforming process is used to convert a hydrocarbon, for example natural gas, into a desired synthesis gas.

Known examples are ammonia or methanol production plants in which a reforming section generates the so-called make-up gas which feeds a following conversion section.

The reforming process, as is well-known, must be carried out at very high temperatures in order to achieve a high hydrocarbon conversion rate. Typically the synthesis gas effluent of the reforming section, for example effluent of a secondary reformer or an autothermal reformer (ATR), has a temperature of about 1000°C.

Said synthesis gas, usually, is cooled to a temperature of about 300-400°C both in order to recover energy and to allow the necessary treatments such as shift treatment, carbon dioxide removal or methanation, which are incompatible with the high gas outlet temperature of the reforming section.

A widely used technique for cooling the synthesis gas and recovering heat is the production of saturated or superheated steam which can be used in the same plant, for example to generate mechanical power and/or provide heat for other stages of the process.

The production of steam starting from a gas at a temperature of about 1000°C, however, has the drawback of poor efficiency from the thermodynamic point of view. The evaporation temperature is in fact limited by technical factors, including the maximum pressure tolerable by the equipment, and is generally within the range of 300 to 350°C. This means that heat is transferred under a large temperature gradient, which results in thermodynamic inefficiency.

A method for making more rational use of the heat from the synthesis gas cis the use of said synthesis gas as a heat source for a gas heated reformer (GHR).

The GHR is essentially a heat exchanger comprising a pressure-resistant shell, normally of the refractory type internally so as to operate at relatively low temperatures, and heat-exchange bodies, for examples tubes. The inside of the heat-exchange bodies contains a reforming catalyst and is traversed by a hydrocarbon to be reformed, while the hot synthesis gas flows inside the shell, on the outside of the bodies.

For example, in a known technique, a first portion of a hydrocarbon charge to be reformed is directed to a primary or secondary reforming furnace and a second portion of said charge is directed to a GHR. The hot synthesis gas effluent of the said reforming furnace, resulting from reforming of the first portion of the charge, provides heat to the GHR, allowing reforming of the second charge portion.

This process is more efficient than steam production from the thermodynamic point of view, because the high-temperature heat of the synthesis gas is used for a process which is also at a high-temperature, that is the process of reforming itself.

The installation of a GHR downstream of an existing primary or secondary reforming section is also a known method for increasing the capacity of existing plants, in particular for ammonia or methanol synthesis. It is known that the reforming section is one of the bottlenecks which prevent an increase of the capacity, typically because the reforming section comprises a primary tube reformer in which the maximum flow-rate of the gas in the tubes can not be increased beyond a certain limit. Installing a GHR suitable to reform part of the fresh hydrocarbon charge removes the bottleneck represented by the reforming section, obtaining a greater quantity of synthesis gas and, therefore, a greater quantity of product.

However, a GHR is a costly apparatus since it must withstand very high temperatures and a very corrosive gas which requires the use of high grade materials to resist. Moreover, inserting one or more GHRs, complete with tube bundle and pressurized vessel, downstream of an existing primary reforming or secondary reforming section, requires modification of the reformer output piping, the construction of new foundations, and elimination or displacement of other existing equipment installed in that zone. Therefore, a revamping or increasing of the capacity based on the installation of a new GHR is not always attractive from the cost point of view.

A method for revamping a front-end of an ammonia plant is disclosed by WO-A-2015/067436.

### Summary of the invention

The object of the invention is to provide a method for revamping a chemical plant based on reforming of a hydrocarbon, and in particular a method for increasing its capacity, which overcomes the aforementioned drawbacks. In particular, the invention aims to provide a method which is thermodynamically efficient and which at the same time is less expensive in terms of investment costs compared to the known methods.

These objects are achieved with a method as defined in claim 1 and in particular with a method for revamping a reforming section of a chemical plant wherein:
the reforming section receives a first stream of a hydrocarbon feed and converts it into an at least partially reformed gas,
the plant comprises at least one apparatus operated as a fluid heater or evaporator (boiler) and comprising a shell and a plurality of first heat exchange bodies, wherein said apparatus is fed on the shell side with at least partially reformed hot gas from the reforming section and the fluid is heated or evaporated inside said first heat exchange bodies, owing to an indirect heat exchange with said hot gas,
the method comprising:
   replacing said first heat exchange bodies with second heat exchange bodies containing a reforming catalyst,
   providing a hydrocarbon feed line arranged to direct a second hydrocarbon feed stream to the inside of said heat exchange bodies, and
   providing a line arranged to withdraw from said second heat exchange bodies an at least partially reformed gas stream,
   the apparatus thus being converted into a gas heated reformer.

Further embodiments are disclosed in the dependent claims.

In a preferred application, the method is applied to a steam generator.

A gas heated reformer is normally referred to, in the literature, by means of the abbreviation GHR. In the following, for the sake of brevity, this abbreviation will be used.

In a preferred embodiment, said second heat exchange bodies have an outlet for said at least partially reformed gas which is in communication with the shell side of the apparatus, so that the gas produced in the said second heat exchange bodies mixes with the gas from the reforming section, forming a stream of at least partially reformed gas withdrawn from the shell of the apparatus.

Preferably, the first and/or second heat exchange bodies are tubes which belong to a tube bundle. More preferably, both the first and the second heat exchange bodies are formed by tubes of a first and second tube bundle, respectively, and the method comprises:
- extracting the first tube bundle from the shell of said apparatus, and
- inserting the second tube bundle into the shell.

Preferably, said apparatus, converted from a steam generator to a GHR, is vertical. For example, the apparatus is vertical with the inlet for the hydrocarbon to be reformed is located at the top; in accordance with this embodiment the tubes of the second tube bundle preferably have a top inlet end for the hydrocarbon and an open bottom outlet end for the at least partially reformed gas.

In other embodiments, the heat exchange bodies may have a different form, for example that of plates.

In a preferred embodiment the apparatus converted into a GHR operates in parallel with the existing reforming section. In accordance with said embodiment, a part of a hydrocarbon feed is directed to the existing reforming section and another part of said hydrocarbon feed is directed to said GHR.

The existing reforming section may comprise for example a primary reformer and a secondary reformer or an ATR.

The capacity of the reforming section, defined as the quantity of synthesis gas which is produced or can be produced by the said section, is increased. The hydrocarbon feed stream directed to the new GHR (obtained by modifying the pre-existing apparatus) can be an additional stream in relation to the maximum capacity of the existing reforming section.

The advantage of the invention is given by the use of the shell of an existing apparatus, already designed to withstand the high temperature of the synthesis gas from the reforming section.

By using this existing shell, there is no need to modify the path of the high-temperature tubes which connect the reformer to the shell, to build new foundations for supporting the new GHR, nor to displace or dismantle existing apparatus.

Said apparatus is converted into a GHR which offers two main advantages: it uses the high-temperature heat of the reformed gas in a thermodynamically more efficient manner and increases the capacity of the reforming section. The economic advantage is considerable because the external shell of a GHR is an important part of the cost of the whole reactor. Moreover the invention avoids modifications to the plant for accommodating the new GHR, which represent an even greater cost.

The operation is simple to carry out because normally the tube bundles are mounted on flanges of the apparatus and therefore it is possible to remove and extract the old bundle and bolt the new bundle, containing the catalyst, on the same flanges. This allows modifications to be performed rapidly, avoiding long and costly plant downtime.

In a particularly preferred embodiment, the first tube bundle and the second tube bundle comprise a single flange. Consequently, the first tube bundle and the second tube bundle can be respectively extracted and inserted, during the revamping operation, from one side only of the apparatus, for example from top. For example the first tube bundle comprises bayonet tubes.

The invention arises from the understanding that an already available apparatus comprising a "valued" component, i.e. the shell able to withstand high temperatures, can be used in a more rational manner. It can be said that the invention reduces the capacity of steam production, but this apparent disadvantage is overcompensated by the efficient use of high-temperature heat for increasing the reforming capacity. Moreover, the reformed gas output from the new GHR maintains a high temperature which still allows the production of steam.

The advantages of the invention will emerge more clearly with the aid of the following description.

### Description of the figures

Fig. 1 shows a scheme of a reforming section with a steam generator.
Fig. 2 shows the section shown in Fig. 1 modified in accordance with the invention, converting the steam generator into a GHR.

### Description of preferred embodiments

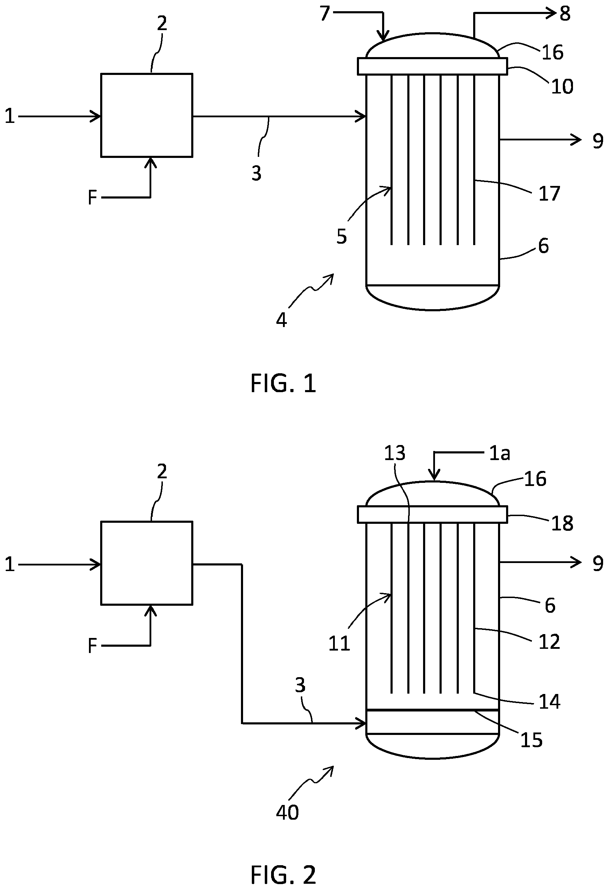

Fig. 1 is a simplified diagram of a reforming section according to the prior art, which may be found for example in an ammonia or methanol plant.

A charge 1 containing steam an at least one hydrocarbon, for example natural gas, is converted in a reforming section 2 to produce a high-temperature reformed gas 3.

The section 2 is fed with a fuel F directed, for example, to the burners of a primary reformer.

Before further treatment and conversion into the product concerned, the reformed gas 3 flows into the shell side of a vertical tube boiler 4, or waste heat boiler (WHB).

Said boiler 4 is a shell-and-tube apparatus.

In greater detail, the boiler 4 contains a tube bundle 5 inside a shell 6. The tube bundle 5 comprises a plurality of bayonet tubes 17 and a single tube plate 10. Each bayonet tube 17 is formed by an outgoing tube and by a return tube coaxial with the outgoing tube, such that the inlet and outlet of the tube bundle are located on a same side, and the tube bundle is supported by a single tube plate 10 according to a known embodiment which comprises means (not shown) for separating the incoming flow from the outgoing flow.

This design with bayonet tubes and single plate allows easy extraction of the tube bundle from the shell. In fact, it is possible to open the shell 6, by unscrewing the bolts of the flange 10, and extract the tube bundle 5, i.e. the tube assembly 17 and the associated plate 10 and cover 16.

The tube bundle 5 is fed with water 7 and produces a stream 8 containing steam and water. The cooled gas 9, output from the shell side, is conveyed to appropriate further process stages, for example for purification and conversion.

Fig. 2 shows the modified reforming section according to the invention. The apparatus 4 is modified by extracting the tube bundle 5 from the shell 6 and inserting a new tube bundle 11 into the shell 6. Said new tube bundle 11 comprises a plate 18 and tubes 12 containing a reforming catalyst (for example the same catalyst used in the reforming section 2).

An additional hydrocarbon feed stream 1a is directed into the tubes 12. Said flow 1a may form part of a hydrocarbon source which also supplies the stream 1 to the section 2.

Advantageously, owing to the addition of the stream 1a, the total quantity of hydrocarbon which can be reformed in Fig. 2 is greater than the quantity which can be reformed in Fig. 1, i.e. the reforming capacity is increased. In other words the modified reforming section, according to the invention, is able to process the stream 1a in addition to the stream 1 and consequently has an increased capacity.

The apparatus 4, originally intended to act as a steam generator, is thus converted into a GHR 40. It should be noted that the original shell 6 is maintained, with significant cost savings compared to the installation of a new GHR.

In greater detail, each of the tubes 12 has an inlet end 13 for said stream 1a and an opposite outlet end 14 for reformed gas, which communicates with the shell side of the apparatus 40. Consequently, the reformed gas produced inside the tubes 12 is mixed with the incoming hot gas 3 and may be extracted from the apparatus 40 via the reformed gas outlet 9 on the shell side.

The incoming gas 3 (from the reforming section 2) is preferably distributed in the shell side via a distributor 15 with holes, enters the bottom part of the shell 6, where it is mixed with the gas output from the tubes 12, and flows upwards along the tube bundle 11, releasing the heat necessary for the reforming steam reaction, and leaves at the top of the shell 6 through the outlet 9.

The reformed gas 9 leaving the GHR 40 has a temperature which is still relatively high and, if necessary, can be used for steam production before the necessary process treatments.

The new tube bundle 11 can be bolted to the same pre-existing flanges 10 and the operation of replacing the bundle 11 with the reforming bundle 12 is relatively simple.

In some embodiments the plant comprises a plurality of steam generators, for example two steam generators, downstream of the reforming section, which can be modified as described above. For example a typical arrangement comprises two vertical boilers downstream of a secondary reformer and both said vertical boilers are converted into GHRs as described above.

## Claims

1. Method for revamping a reforming section (2) of a chemical plant in which:
the reforming section (2) receives a first stream (1) of a hydrocarbon feed and steam and converts it into at least partially reformed gas (3),
the plant comprises at least one apparatus (4) operated as heater or evaporator of a fluid and comprising a shell (6) and first heat exchange bodies (5), wherein said apparatus is heated with at least partially reformed hot gas (3) coming from the reforming section (2) and fed to the shell side, and said fluid is heated and/or evaporated inside said first heat exchange bodies by means of indirect heat exchange with said hot gas,
the method comprising:
modifying said apparatus by replacing said first heat exchange bodies with second heat exchange bodies (12) containing a reforming catalyst,
providing a hydrocarbon feed line (1a) arranged to direct a second stream of a hydrocarbon feed inside said second heat exchange bodies, and
providing a line (9) arranged to withdraw an at least partially reformed gas stream from said second heat exchange bodies,
the apparatus (4) thus being converted into a gas heated reformer.

2. Method according to claim 1, wherein said second heat exchange bodies have an outlet which is in communication with the shell side of the apparatus, so that the at least partially reformed gas produced in said heat exchange bodies is mixed with the at least partially reformed gas supplied from said reforming section, forming a stream of gaseous product which is withdrawn from the shell of the apparatus.

3. Method according to claim 1 or 2, wherein said first and second heat exchange bodies are tubes belonging to a first and a second tube bundle respectively, and the method comprises:
- extracting the first tube bundle from the shell of said apparatus, and
- inserting the second tube bundle into the shell.

4. Method according to claim 3, wherein the first tube bundle and the second tube bundle comprise a single flange, so that they can be respectively extracted and inserted from one side only of the apparatus.

5. Method according to any one of the preceding claims, wherein said apparatus is vertical.

6. Method according to any one of the preceding claims, wherein said apparatus, converted into a gas heated reformer, operates in parallel with the existing reforming section, wherein a part of a hydrocarbon feed is directed to the existing reforming section and another part of said hydrocarbon feed is directed to said apparatus converted into a gas heated reformer.

7. Method according to any one of the preceding claims, wherein two steam generators downstream of the reforming section are converted respectively into a first and a second gas heated reformer, respectively.

8. Method according to any one of the preceding claims, wherein the chemical plant is a plant for methanol synthesis or for ammonia synthesis.

## Patentansprüche

1. Verfahren zum Nachrüsten eines Reformierungsabschnitts (2) einer chemischen Anlage, bei dem:
der Reformierungsabschnitt (2) einen ersten Strom (1) einer Kohlenwasserstoffzufuhr und Dampf empfängt und ihn in ein zumindest teilweise reformiertes Gas (3) umwandelt,
die Anlage mindestens einen Apparat (4) umfasst, der als Erhitzer oder Verdampfer eines Fluids betrieben wird und einen Mantel (6) und erste Wärmeaustauschkörper (5) umfasst, wobei der Apparat mit zumindest teilweise reformiertem Heißgas (3) beheizt wird, das aus dem Reformierungsabschnitt (2) kommt und der Mantelseite zugeführt wird, und das Fluid innerhalb der ersten Wärmeaustauschkörper durch indirekten Wärmeaustausch mit dem Heißgas erhitzt und/oder verdampft wird,
das Verfahren umfasst:
Modifizieren des Apparats durch Ersetzen der ersten Wärmeaustauschkörper durch zweite Wärmeaustauschkörper (12), die einen Reformierungskatalysator enthalten,
Bereitstellen einer Kohlenwasserstoffzufuhrleitung (1a), die so angeordnet ist, dass sie einen zweiten Strom einer Kohlenwasserstoffzufuhr in die zweiten Wärmeaustauschkörper leitet, und
Bereitstellen einer Leitung (9), die so angeordnet ist, dass sie einen zumindest teilweise reformierten Gasstrom aus den zweiten Wärmeaustauschkörpern abzieht,
wobei der Apparat (4) somit in einen gasbeheizten Reformer umgewandelt wird.

2. Verfahren nach Anspruch 1, bei dem die zweiten Wärmeaustauschkörper einen Auslass haben, der mit der Mantelseite des Apparats in Verbindung steht, so dass das in den Wärmeaustauschkörpern erzeugte, zumindest teilweise reformierte Gas mit dem von dem Reformierungsabschnitt zugeführten, zumindest teilweise reformierten Gas gemischt wird und einen Strom aus gasförmigem Produkt bildet, der aus dem Mantel des Apparats abgezogen wird.

3. Verfahren nach Anspruch 1 oder 2, bei dem die ersten und zweiten Wärmeaustauschkörper Rohre sind, die zu einem ersten bzw. einem zweiten Rohrbündel gehören, und das Verfahren umfasst:
- Entnehmen des ersten Rohrbündels aus dem Mantel des Apparats, und
- Einsetzen des zweiten Rohrbündels in den Mantel.

4. Verfahren nach Anspruch 3, bei dem das erste Rohrbündel und das zweite Rohrbündel einen einzigen Flansch aufweisen, so dass sie jeweils nur von einer Seite des Apparats aus entnommen bzw. eingesetzt werden können.

5. Verfahren nach einem der vorhergehenden Ansprüche, bei dem der Apparat vertikal ist.

6. Verfahren nach einem der vorangehenden Ansprüche, bei dem der in einen gasbeheizten Reformer umgewandelte Apparat parallel zu dem bestehenden Reformierungsabschnitt arbeitet, wobei ein Teil einer Kohlenwasserstoffzufuhr zu dem bestehenden Reformierungsabschnitt und ein anderer Teil der Kohlenwasserstoffzufuhr zu dem in einen gasbeheizten Reformer umgewandelten Apparat geleitet wird.

7. Verfahren nach einem der vorhergehenden Ansprüche, bei dem zwei Dampferzeuger stromabwärts des Reformierungsbereichs jeweils in einen ersten bzw. einen zweiten gasbeheizten Reformer umgewandelt werden.

8. Verfahren nach einem der vorhergehenden Ansprüche, bei dem die chemische Anlage eine Anlage zur Methanol-Synthese oder zur Ammoniak-Synthese ist.

## Revendications

1. Procédé de modernisation d'une section de reformage (2) d'une usine chimique dans lequel :
la section de reformage (2) reçoit un premier flux (1) d'une charge d'alimentation en hydrocarbures et de vapeur et le convertit en un gaz au moins partiellement reformé (3),
l'usine comprend au moins un appareil (4) fonctionnant comme un dispositif de chauffage ou un évaporateur d'un fluide et comprenant une calandre (6) et des premiers corps d'échange de chaleur (5), où ledit appareil est chauffé avec du gaz chaud au moins partiellement reformé (3) provenant de la section de reformage (2) et acheminé vers le côté calandre, et ledit fluide est chauffé et/ou évaporé à l'intérieur desdits premiers corps d'échange de chaleur au moyen d'un échange de chaleur indirect avec ledit gaz chaud,
le procédé comprenant les étapes consistant à :
modifier ledit appareil en remplaçant lesdits premiers corps d'échange de chaleur par des deuxièmes corps d'échange de chaleur (12) contenant un catalyseur de reformage,
fournir une conduite d'alimentation en hydrocarbures (la) agencée pour diriger un deuxième flux d'une charge d'alimentation en hydrocarbures à l'intérieur desdits deuxièmes corps d'échange de chaleur, et
fournir une conduite (9) agencée pour retirer un flux de gaz au moins partiellement reformé desdits deuxièmes corps d'échange de chaleur,
l'appareil (4) étant ainsi converti en un reformeur chauffé au gaz.

2. Procédé selon la revendication 1, dans lequel lesdits deuxièmes corps d'échange de chaleur ont une sortie qui est en communication avec le côté calandre de l'appareil, de sorte que le gaz au moins partiellement reformé produit dans lesdits corps d'échange de chaleur soit mélangé avec le gaz au moins partiellement reformé fourni à partir de ladite section de reformage, formant un flux de produit gazeux qui est retiré de la calandre de l'appareil.

3. Procédé selon la revendication 1 ou 2, dans lequel lesdits premiers et deuxièmes corps d'échange de chaleur sont des tubes appartenant à un premier et un deuxième faisceaux de tubes, respectivement, et le procédé comprend les étapes consistant à :
- extraire le premier faisceau de tubes de la calandre dudit appareil, et
- insérer le deuxième faisceau de tubes dans la calandre.

4. Procédé selon la revendication 3, dans lequel le premier faisceau de tubes et le deuxième faisceau de tubes comprennent une seule bride, de sorte qu'ils puissent être respectivement extraits et insérés d'un seul côté de l'appareil.

5. Procédé selon l'une quelconque des revendications précédentes, dans lequel ledit appareil est vertical.

6. Procédé selon l'une quelconque des revendications précédentes, dans lequel ledit appareil, converti en un reformeur chauffé au gaz, fonctionne en parallèle avec la section de reformage existante, où une partie d'une charge d'alimentation en hydrocarbures est dirigée vers la section de reformage existante et une autre partie de ladite charge d'alimentation en hydrocarbures est dirigée vers ledit appareil converti en un reformeur chauffé au gaz.

7. Procédé selon l'une quelconque des revendications précédentes, dans lequel deux générateurs de vapeur en aval de la section de reformage sont convertis respectivement en un premier et un deuxième reformeurs chauffés au gaz, respectivement.

8. Procédé selon l'une quelconque des revendications précédentes, dans lequel l'usine chimique est une usine pour la synthèse de méthanol ou pour la synthèse d'ammoniac.
